# EUROPÄISCHE PATENTSCHRIFT

(11) **EP 1 591 011 B1**
(45) Veröffentlichungstag und Bekanntmachung des Hinweises auf die Patenterteilung: **29.12.2010**
(21) Anmeldenummer: 05008599.2
(22) Anmeldetag: 20.04.2005
(51) Int. Cl.: A21B 1/24, A21B 1/42

(54) **Backofen**
Baking oven
Four de cuisson

(30) Priorität: 27.04.2004 DE 102004020745
(43) Veröffentlichungstag der Anmeldung: 02.11.2005
(73) Patentinhaber: Werner & Pfleiderer Lebensmitteltechnik GmbH, 91550 Dinkelsbühl (DE)
(72) Erfinder: Knost, Dieter, Dipl.-Ing., 91550 Dinkelsbühl (DE); Dannenhauer, Bernd, 91550 Dinkelsbühl (DE)
(74) Vertreter: Hofmann, Matthias

(56) Entgegenhaltungen:
- EP-A- 1 486 120
- FR-A1- 2 323 116
- US-A- 1 485 173
- US-A1- 2001 022 178

## Beschreibung

Die Erfindung betrifft einen Backofen nach dem Oberbegriff des Anspruchs 1. Ferner betrifft die Erfindung ein Backsystem nach Anspruch 17.

Ein derartiger Backofen ist durch offenkundige Vorbenutzung bekannt. Die Flexibilität eines derartigen bekannten Backofens lässt, insbesondere was die Anforderungen an einen Ladenbackofen, also an einen direkt für Kunden in einem Geschäft zugänglichen Ofen, angeht, noch zu wünschen übrig.

Aus der US 2001/0022178 A1 ist ein Backofen mit einem Backofengehäuse und einem Backraum sowie mit einer Zugabeöffnung zur Zugabe und einer Ausgabeöffnung zur Ausgabe von Backgut bekannt. Der Backofen hat ferner eine Umluftquelle und eine Fördereinrichtung zur Förderung des Backguts von der Zugabeöffnung durch den Backraum hin zur Ausgabeöffnung. Der Backraum ist in zwei Backzonen unterteilt, die jeweils mindestens eine eigene Backofen-Zugabeöffnung aufweisen.

Es ist daher eine Aufgabe der vorliegenden Erfindung, einen Backofen der eingangs genannten Art derart weiterzubilden, dass beim Backen flexibel auf verschiedene Kundenwünsche eingegangen werden kann.

Diese Aufgabe ist erfindungsgemäß gelöst durch einen Backofen mit den im Kennzeichnungsteil des Anspruchs 1 angegebenen Merkmalen.

Erfindungsgemäß wurde erkannt, dass es möglich ist, in ein und demselben Backofen einerseits Backgut zu backen, welches zugabeseitig in Form einer losen Schüttung vorliegt und als solche auch gefördert wird, und andererseits Backgut zu backen, welches stückweise einzeln vorliegt und auch entsprechend gefördert wird. Als Schüttung können zum Beispiel Brötchen verschiedener Typen vorliegen. Stückweise einzeln liegen zum Beispiel Brote oder Baguettes vor, die auch entsprechend stückweise gefördert werden. Mit dem erfindungsgemäßen Backofen lassen sich nun diese beiden unterschiedlich vorliegenden und zu fördernden Backgut-Grundtypen backen. Dabei wird der Backraum in Backzonen unterteilt, die zum Backen des jeweiligen Grundtyps dienen. Diese räumliche Unterteilung erlaubt weiterhin die Beheizung der Backzonen mit ein und derselben Umluftquelle. Insgesamt resultiert ein Ofen, bei dem flexibel auf Kundenanforderungen eingegangen werden kann. Dies kann unter dem Schlagwort "backen on demand" zusammengefasst werden. Der Backofen kann als reiner Umluft-Backofen ausgestaltet sein, also nur über Konvektion heizen, oder auch eine Kombination aus Konvektions- und Strahlungswärme bereitstellen. Hierzu kann der Backofen zusätzlich zur Umluftquelle auch eine oder mehrere Strahlungs-Wärmequellen aufweisen. Diese können insbesondere als Heizstrahler ausgeführt sein. Mit den Strahlungs-Wärmequellen kann zum Beispiel Ober- beziehungsweise Unterhitze bereitgestellt werden. Mit Backtrommeln mit jeweils mindestens einem Aufnahmeabschnitt für Backgut und einer äußeren Begrenzungswand, wobei eine Antriebseinrichtung vorgesehen ist, mit welcher der Aufnahmeabschnitt um eine horizontal verlaufende Rotationsachse angetrieben ist, lässt sich der in Form einer losen Schüttung vorliegende Backgut-Grundtyp automatisiert backen. Dabei ist, wenn mehrere Backtrommeln vorgesehen sind, je nach Ausgestaltung des Backofens, sowohl eine feste Zuordnung der einzelnen Backtrommeln zu verschiedenen Typen von Backgut, also sortenreines Backen, oder auch eine freie Zuordnung möglich. Der mindestens eine Aufnahmeabschnitt ist nach außen hin durch die äußere Begrenzungswand der Backtrommel und nach innen hin durch eine innere Begrenzungswand begrenzt, wobei die Antriebseinrichtung so ausgeführt ist, dass die beiden Begrenzungswände relativ zueinander um die Rotationsachse angetrieben sind. Eine derartige Backtrommel ist flexibel einsetzbar.

Mit den Flügeln nach Anspruch 2 wird die Rotation der Backtrommeln beim Backen elegant gleichzeitig zur Umluftumwälzung ausgenutzt. Zusätzlich können auch andere Mittel zur Umluftumwälzung eingesetzt werden. Die Flügel können alternativ oder zusätzlich außen an der äußeren Begrenzungswand der Backtrommeln angeordnet sein.

Flügel nach Anspruch 3 lassen sich kostengünstig herstellen.

Eine Backtrommel nach Anspruch 4 lässt sich automatisiert befüllen bzw. entleeren.

Ein Weichenelement nach Anspruch 5 erlaubt das Befüllen von zwei Backtrommeln mit Hilfe eines Förderabschnitts und durch eine Backofen-Zugabeöffnung. Dies vereinfacht die Konstruktion des Backofens.

Ein Weichenelement nach Anspruch 6 ist unaufwändig.

Ein Vereinzeler nach Anspruch 7 gestattet eine automatische Zufuhr von Backgut des Grundtyps "lose Schüttung" zum Backofen. Mit der Vorschalt-Fördereinrichtung lässt sich eine vorgegebene Backgutmenge zwischenspeichern.

Eine Vorschalt-Fördereinrichtung nach Anspruch 8 lässt sich unaufwändig realisieren. Mittels der bevorzugt einsetzbaren Mehrzahl von Förderaufnahmen ist eine kontrollierte Zugabe von Backgut des Grundtyps "lose Schüttung" zum Backraum des Backofens möglich.

Eine Ausgestaltung des Endlos-Vorschaltförderbands nach Anspruch 9 erlaubt ein automatisiertes Befüllen des Backofens.

Ein Endlos-Ausgabeförderband nach Anspruch 10 ermöglicht ein einfaches Abführen von ausgebackenem Backgut aus der ersten Backzone. Soweit mehrere Backtrommeln in der ersten Backzone vorgesehen sind, kann in einer alternativen Ausgestaltung jeder Backtrommel ein eigenes Endlos-Ausgabeförderband zugeordnet sein. Dies ist insbesondere dann sinnvoll, wenn in den verschiedenen Backtrommeln verschiedene Sorten von Backgut gebacken werden.

Mindestens ein Endlos-Backförderband nach Anspruch 11 erlaubt eine unaufwändige Förderung von stückweise vorliegendem und gefördertem Backgut. Letzteres kann insbesondere relativ dicht gepackt automatisiert gebacken werden.

Eine Anordnung von Endlos-Förderbändern nach den Ansprüchen 12 bzw. 13 führt zu einem kompakten Backofen. Mit der etagenweisen Anordnung der Förderbänder lässt sich zudem gezielt eine Temperaturschichtung im Backraum herbeiführen, die dazu genutzt werden kann, Backguttypen mit unterschiedlichen Backanforderungen gleichzeitig zu backen. Mit einer Mehrzahl von Endlos-Backförderbändern kann zudem eine Sortentrennung der verschiedenen Backguttypen realisiert werden.

Mindestens eine Strahlungs-Wärmequelle nach Anspruch 14 führt zur Möglichkeit, den Backraum des Backofens je nach Backanforderung flexibel zu beheizen. Insbesondere ist es möglich, eine vorgegebene Temperaturverteilung durch entsprechende Vorgabe der Heizleistungen der Umluftquelle einerseits und der Strahlungs-Wärmequelle andererseits zu erzeugen. Dies kann zum Ausbacken verschiedener Backguttypen genutzt werden.

Heizstrahler nach Anspruch 15 haben sich zur Erzeugung von Strahlungswärme bewährt.

Eine Anordnung der Strahlungs-Wärmequelle nach Anspruch 16 ist platzsparend. Insbesondere bei mehreren etagenweise übereinander angeordneten Förderbändern für Backgut ergibt sich bei einer derartigen Anordnung der Strahlungs-Wärmequelle die Möglichkeit, die Strahlungs-Wärmequelle gleichzeitig zur Unterhitze für das darüber geförderte Backgut und zur Oberhitze für das darunter geförderte Backgut einzusetzen.

Eine weitere Aufgabe der Erfindung ist es, ein Backsystem zu schaffen, in dem der erfindungsgemäße Backofen automatisiert eingesetzt werden kann.

Diese Aufgabe ist erfindungsgemäß gelöst durch ein Backsystem nach Anspruch 17.

Das erfindungsgemäße Backsystem erlaubt eine automatische Zufuhr von Backgut beider Backgut-Grundtypen hin zum Backofen, wobei eine Auswahl steuerseitig dahingehend getroffen werden kann, welcher der beiden Backzonen Backgut zugeführt werden soll.

Ein Ausführungsbeispiel der Erfindung wird nachfolgend anhand der Zeichnung näher erläutert. In dieser zeigen:
- Fig. 1: eine perspektivische Ansicht eines Backsystems mit einem Back- ofen und einer vorgeschalteten Fördervorrichtung;
- Fig. 2: eine Aufsicht auf den Backofen mit der Fördervorrichtung;
- Fig. 3: eine perspektivische Ansicht des Backofens mit der Fördervor- richtung mit abgenommenem Backofengehäuse;
- Fig. 4: einen vertikalen Längsschnitt durch eine Mittelebene des Back- ofens und der Fördervorrichtung;
- Fig. 5: einen perspektivischen und zur Fig. 4 ähnlichen Schnitt durch das Backsystem mit einer einem Vereinzeler nachgeordneten Vor- schalt-Fördereinrichtung in einer ersten Abgabestellung, in der die Vorschalt-Fördereinrichtung einer ersten Backofen- Zugabeöffnung zugeordnet ist; und
- Fig. 6: eine zu Fig. 5 ähnliche Darstellung, in der die Vorschalt- Fördereinrichtung in einer zweiten Abgabestellung angeordnet ist, in welcher sie einer zweiten Backofen-Zugabeöffnung zuge- ordnet ist.

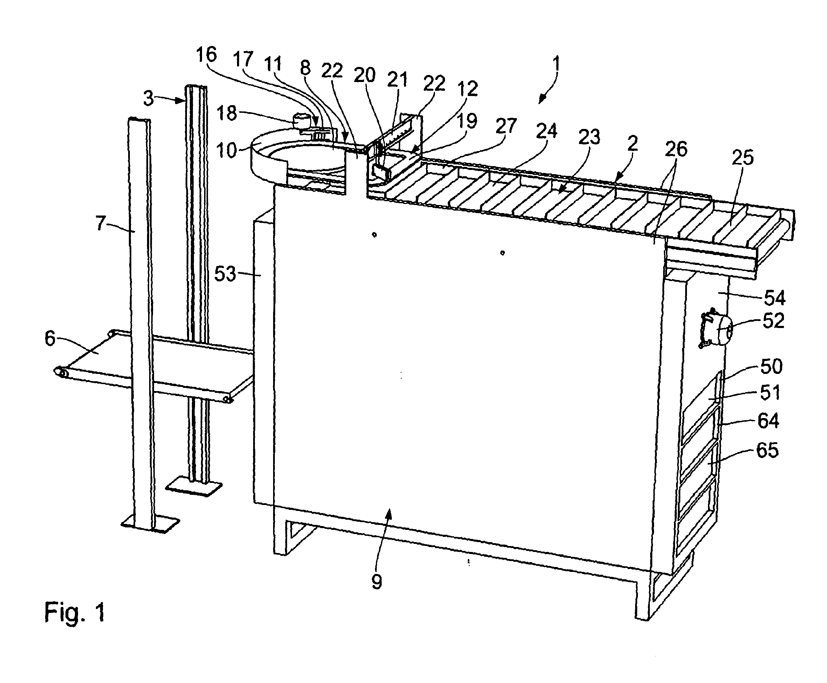

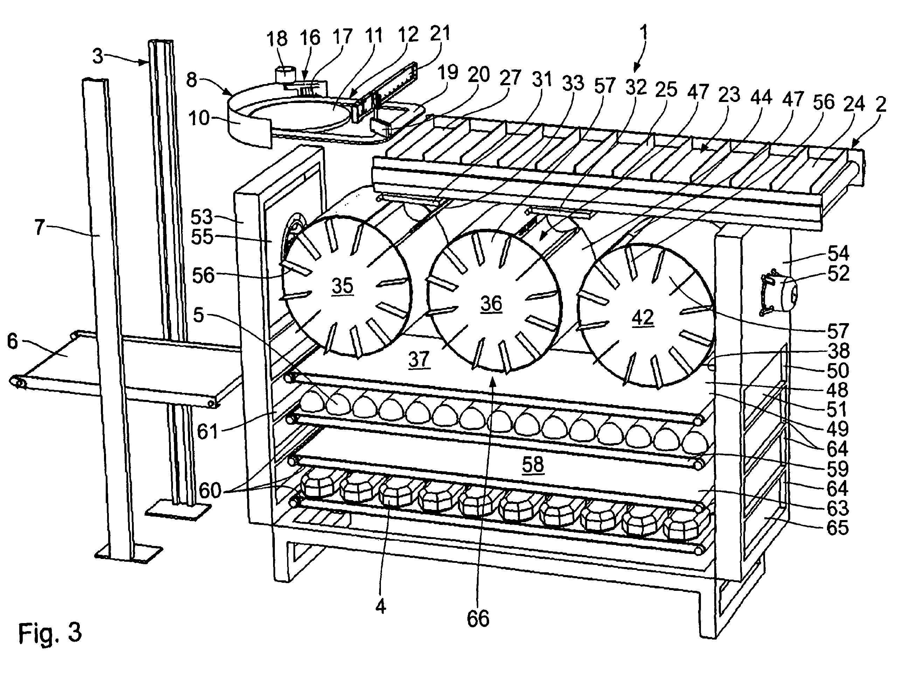

Ein Backsystem 1 nach den Fig. 1 bis 4 mit einem Backofen 2 und einer diesem vorgeschalteten Fördervorrichtung 3 dient zum frischen Backen von Gebäckstücken. Letztere liegen einerseits als Mehrzahl von Stücken Backgut zugabeseitig des Backofens 2 in Form einer losen Schüttung vor. Bei diesen Gebäckstücken eines ersten Grundtyps handelt es sich insbesondere um Brötchen-Teiglinge, die auch teil- oder tiefgefroren sein können. Andererseits liegt das im Backofen 2 zu backende Backgut als zweiter Grundtyp in Form einer Mehrzahl von Gebäckstücken 4, 5, zum Beispiel in Form von Broten und Baguettes vor, die stückweise einzeln vorliegen und gefördert werden.

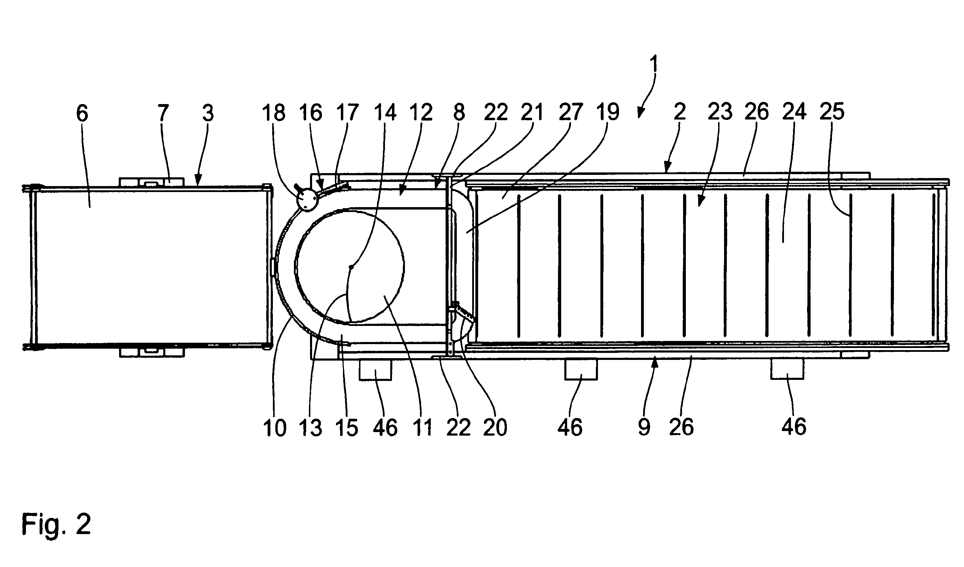

Die Fördervorrichtung 3 weist ein angetriebenes Endlos-Förderband 6 auf. Letzteres ist beidseitig mittig zwischen seinen beiden Umlenkrollen an zwei das Endlos-Förderband 6 zwischen sich aufnehmenden Hubsäulen 7 gelagert. Mittels eines nicht dargestellten Hubantriebs kann das Endlos-Förderband 6 relativ zu den Hubsäulen 7 hubverlagert werden. Mit dem Endlos-Förderband 6 in Förderverbindung steht ein Vereinzeler 8, der zur Fördervorrichtung 3 hin auf der Oberseite eines Backofengehäuses 9 des Backofens 2 angeordnet ist. Der Vereinzeler 8 weist zur Fördervorrichtung 3 hin ein halbrund gebogenes Abweisblech 10 auf, welches verhindert, dass Stücke Backgut der losen Schüttung vom Vereinzeler 8 zurück auf die Fördervorrichtung 3 fallen. Ferner weist der Vereinzeler 8 einen runden Vereinzelerboden 11 auf. Um letzteren herum ist ein Schuppen-Förderband 12 angeordnet. Der Vereinzelerboden 11 und das Förderband 12 sind unabhängig voneinander mittels nicht dargestellter Antriebsmotoren antreibbar. In der Aufsicht nach Fig. 2 wird der Vereinzelerboden 11 entgegen dem Uhrzeigersinn und das Schuppen-Förderband 12 im Uhrzeigersinn angetrieben.

Starr mit einem nicht dargestellten backofengehäusefesten Träger ist knapp über dem Vereinzelerboden 11 ein nur in Fig. 2 dargestelltes gebogenes Leitblech 13 verbunden. Letzteres erstreckt sich von einer zentralen, vertikalen Rotationsachse 14 des Vereinzelerbodens 11 bis zu dem zwischen dem Vereinzelerboden 11 und dem Schuppen-Förderband 12 angeordneten Träger.

Ein dem trägerseitigen Ende des Leitblechs 13 benachbarter Abschnitt des Schuppen-Förderbandes 12 wird nachfolgend als Aufgabeabschnitt 15 bezeichnet. Stromabwärts des Aufgabeabschnitts 15 ist neben dem Schuppen-Förderband 12 an dessen Außenseite ein Vereinzelungs-Abweiser 16 angeordnet. Dieser weist eine Abweisklappe 17 auf, die von einer Antriebseinheit 18 zwischen einer in der Zeichnung dargestellten Durchgangsstellung und einer Abweisstellung umgestellt werden kann. In letzterer versperrt die Abweisklappe 17 das Schuppen-Förderband 12. In Bezug auf die Förderrichtung des Schuppen-Förderbandes 12 stromabwärts ist dem Vereinzelungs-Abweiser 16 ein nicht dargestellter und als Lichtschranke ausgebildeter Vereinzelungssensor zugeordnet.

In der Aufsicht nach Fig. 2 hat das Schuppen-Förderband 12 in etwa die Form eines spiegelverkehrten Buchstabens "D". Der gerade D-Schenkel des Schuppen-Förderbandes 12 wird nachfolgend als Abgabeabschnitt 19 bezeichnet. Längs dem Abgabeabschnitt 19 angetrieben verstellbar ist ein Abgabeschieber 20. Dieser ist geführt an einer über dem Schuppen-Förderband 12 angeordneten Führungsschiene 21, die wiederum zwischen zwei gegenüberliegenden und backofengehäusefesten Tragabschnitten 22 gehalten ist. In Förderrichtung des längs des Schuppen-Förderbandes 12 geförderten Backguts ist dem Abgabeschieber 20 eine Vorschalt-Fördereinrichtung 23 nachgeordnet. Diese ist als Endlos-Vorschaltförderband ausgebildet. Die Vorschalt-Fördereinrichtung 23 weist eine Mehrzahl von Förderaufnahmen 24 auf, die durch mitlaufende Trennwandabschnitte 25 voneinander getrennt sind.

Die Vorschalt-Fördereinrichtung 23 ist auf dem Backofen 2 angeordnet. Sie ist zwischen Seitenwänden 26 des Backofengehäuses 9 geführt und derart horizontal verlagerbar, dass ein in der Zeichnung linkes Ende 27 der Vorschalt-Fördereinrichtung 23 in einer Aufnahmestellung dem Vereinzeler 8, in einer ersten Abgabestellung einer ersten Backofen-Zugabeöffnung 28 und in einer zweiten Abgabestellung einer zweiten Backofen-Zugabeöffnung 29 im Backofengehäuse 9 zugeordnet werden kann. In der Zeichnung ist die erste Backofen-Zugabeöffnung 28 links von der zweiten Backofen-Zugabeöffnung 29 angeordnet. Beide Zugabeöffnungen 28, 29 sind in einer oberen Begrenzungswand 30 des Backofengehäuses 9 ausgeführt und können jeweils mittels einer angetrieben schwenkbaren Verschlussklappe 31, 32 verschlossen werden.

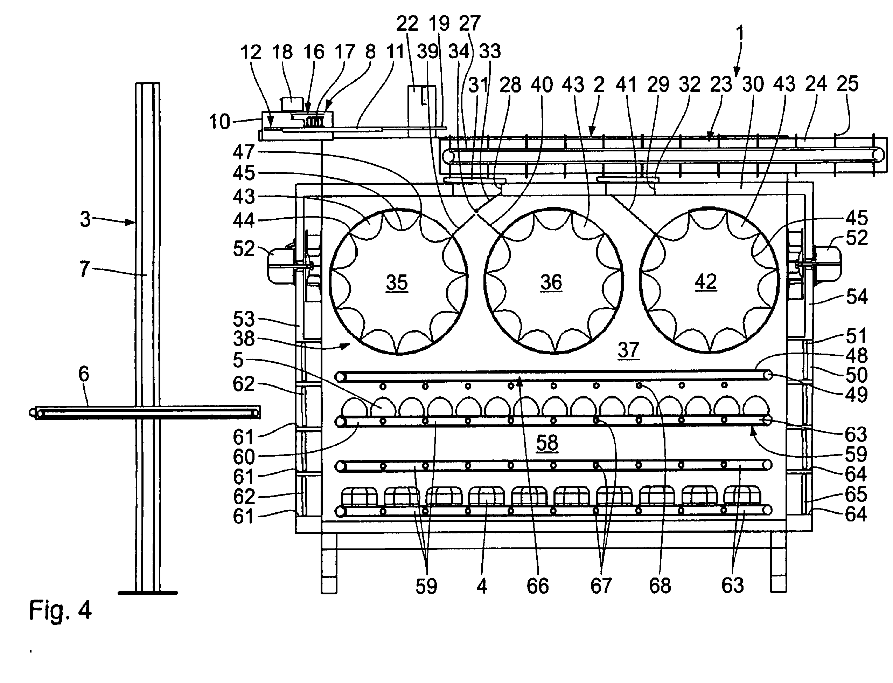

Der ersten Backofen-Zugabeöffnung 28 ist in Förderrichtung des Backguts eine Umschaltklappe 33 nachgeordnet. Letztere ist um eine Schwenkachse 34 senkrecht zur Zeichenebene der Fig. 4 schwenkbar. Die Umschaltklappe 33 ist als Weichenelement Teil eines Förderabschnitts zwischen der ersten Backofen-Zugabeöffnung 28 und zwei Backtrommeln 35, 36 einer ersten Backzone 37 eines Backraums 38 des Backofens 2. Der Umschaltklappe 33 in Förderrichtung für das Backgut nachgeordnet ist eine erste Förderrutsche 39, die der in der Zeichnung linken Backtrommel 35 zugeordnet ist, sowie eine zweite Förderrutsche 40, die der in der Zeichnung mittleren Backtrommel 36 zugeordnet ist.

Der zweiten Backofen-Zugabeöffnung 29 ist in Förderrichtung eine dritte Förderrutsche 41 nach- und einer in Fig. 4 rechten Backtrommel 42 zugeordnet. Die insgesamt drei Backtrommeln 35, 36,42 haben den gleichen Aufbau, so dass es nachfolgend ausreicht, eine der drei Backtrommeln 35, 36, 42 zu beschreiben.

Die Backtrommel 35 weist eine Mehrzahl, im vorliegenden Ausführungbeispiel insgesamt elf Aufnahmeabschnitte 43 für Backgut auf. Diese sind nach außen hin durch eine äußere Begrenzungswand 44 und nach innen hin durch eine innere Begrenzungswand 45 der Backtrommel 35 begrenzt. Die beiden Begrenzungswände 44, 45 können um eine mit der Rotationssymmetrieachse der Backtrommel 35 zusammenfallende Rotationsachse mit Hilfe einer nur in Fig. 2 schematisch dargestellten Antriebseinrichtung 46 unabhängig voneinander angetrieben werden. Werden beide Begrenzungswände 44, 45 synchron miteinander angetrieben, werden somit auch die Aufnahmeabschnitte 43 um diese Rotationsachse angetrieben. Die äußere Begrenzungswand 44 weist eine Durchtrittsöffnung 47 auf, deren Breite in Umfangsrichtung der Breite eines Aufnahmeabschnitts 43 entspricht.

Unterhalb der drei nebeneinander angeordneten Backtrommeln 35, 36, 42 ist ein Endlos-Ausgabeförderband 48 angeordnet. Ein in der Zeichnung rechter Ausgabeabschnitt 49 des Endlos-Ausgabeförderbandes 48 ist einer ersten Backofen-Abgabeöffnung 50 benachbart, welche mittels einer schwenkbaren Verschlusskappe 51 verschlossen werden kann.

Der Backofen 2 ist ein Umluft-Backofen. Als Umluft-Quelle dienen zwei Ventilatoren 52, die mit entsprechenden Heizquellen, nämlich Heizspulen, ausgerüstet sind. Die Ventilatoren 52 sind an gegenüberliegenden Seitenwänden 53, 54 des Backofengehäuses 9 montiert, die in der Zeichnung links und rechts dargestellt sind.

Die Ventilatoren 52 saugen die Umluft zentral aus dem Backraum 38 an und geben sie radial aufgeheizt wieder in den Backraum 38 ab. Zur Trennung zwischen der Ansaug- und der Abgabezone in der Nachbarschaft der Ventilatoren 52 dient jeweils ein parallel zu den Seitenwänden 53, 54 im Backraum 38 angeordnetes rechteckiges Leitblech 55.

Zur Umwälzung der mit den Ventilatoren 52 im Backraum 38 erzeugten Umluft weisen die Backtrommeln 35, 36, 42 stirnseitig jeweils eine Mehrzahl, nämlich jeweils zwölf, von Flügeln 56 auf. Letztere sind an Stirnwänden 57 der Backtrommeln 35, 36, 42 montiert und erstrecken sich vom äußeren Umfang der Stirnwände 57 radial und gerade verlaufend bis etwa zum halben Radius der Stirnwände 57 nach innen.

Die Backtrommeln 35, 36, 42 und das Endlos-Ausgabeförderband 48 sind in der ersten Backzone 37 des Backraums 38 angeordnet, die dem Backen des in Form einer losen Schüttung vorliegenden und geförderten Backguts dient.

Unterhalb der ersten Backzone 37 und frei mit dieser verbunden liegt im Backraum 38 eine zweite Backzone 58. In dieser ist eine Mehrzahl, in der dargestellten Ausführung drei, von Endlos-Backförderbändern 59 etagenweise übereinander und unter dem Endlos-Ausgabeförderband 48 angeordnet. Die Förderbänder 48, 59 sind aus luftdurchlässigem Stahlgeflecht. Das Endlos-Ausgabeförderband 48 sowie die Endlos-Backförderbänder 59 sind unabhängig voneinander antreibbar.

Auf den Endlos-Backförderbändern 59 wird in der zweiten Backzone 58 stückweise einzeln vorliegendes und gefördertes Backgut gebacken. Das oberste Endlos-Backförderband 59 trägt eine Reihe von quer zur Förderrichtung angeordneten Baguettes 5. Das unterste der Endlos-Backförderbänder 59 trägt eine Reihe nebeneinander quer angeordneter Brote 4. In der Zeichnung linke Zugabeabschnitte 60 der Endlos-Backförderbänder 59 sind benachbart zu Backofen-Zugabeöffnungen 61 in der linken Seitenwand 53 des Backofengehäuses 9 angeordnet. Die Backofen-Zugabeöffnungen 61 können mittels schwenkbarer Verschlussklappen 62 verschlossen werden. In der Zeichnung rechte Abgabeabschnitte 63 der Endlos-Backförder-bänder 59 sind benachbart zu Backofen-Ausgabeöffnungen 64 angeordnet. Letztere können mit verschwenkbaren Verschlusskappen 65 verschlossen werden.

Die Umschaltklappe 33, die Förderrutschen 39, 40, 41, die angetriebenen Backtrommeln 35, 36, 42, das Endlos-Ausgabeförderband 48 sowie die Endlos-Backförderbänder 59 sind Bestandteile einer gesteuerten Fördereinrichtung 66 zur Förderung des Backguts der beiden Grundtypen, also des in Form einer losen Schüttung vorliegenden Backguts durch die erste Backzone 37 und des stückweise vorliegenden Backguts 4, 5 durch die zweite Backzone 58 von den Zugabeöffnungen 28, 29 und 61 zu den Ausgabeöffnungen 50, 64.

Das Backsystem 1 wird, gesteuert von einer nicht dargestellten Steuereinrichtung, folgendermaßen betrieben: Zunächst wird zum Beispiel anhand eines Kundenwunsches ermittelt, welcher Grundtyp von Backgut gebacken werden soll. Soll Backgut, welches in Form einer losen Schüttung vorliegt, gebacken werden, wird dies zunächst in nicht dargestellter Weise auf das Endlos-Förderband 6 der dem Backofen 2 vorgeschalteten Fördervorrichtung 3 aufgelegt. Das Endlos-Förderband 6 wird dann nach oben hubverlagert, bis die Förderebene des Endlos-Förderbandes 6 oberhalb des Vereinzelers 8 liegt. Mittels eines nicht dargestellten Querantriebs wird dann das Endlos-Förderband 6 insgesamt soweit in der Förderebene horizontal verlagert, bis das Abgabeende des Endlos-Förderbandes 6 über dem Vereinzelerboden 11 des Vereinzelers 8 liegt. Das Endlos-Förderband 6 wird dann so angetrieben, dass eine erste Charge von Backgut auf den Vereinzelerboden 11 abgegeben wird. Zum Vereinzeln des Backguts rotiert der Vereinzelerboden 11 in Fig. 2 entgegen dem Uhrzeigersinn. Das Backgut wird dann mit Hilfe des Leitblechs 13 auf den Aufgabeabschnitt 15 des Schuppen-Förderbands 12 geleitet. Letzteres wird dann in Fig. 2 im Uhrzeigersinn angetrieben, so dass das auf dem Schuppen-Förderband 12 vorliegende Backgut an der zunächst in Durchlassstellung vorliegenden Abweisklappe 17 des Vereinzelungs-Abweisers 16 vorbeigefördert wird. Sobald das führende Stück Backgut den Vereinzelungssensor nach dem Vereinzelungs-Abweiser 16 passiert hat, wird die Abweisklappe 17 in die Abweisstellung umgestellt, so dass auf dem Schuppen-Förderband 12 nachfolgende Stücke Backgut wieder auf den Vereinzelerboden 11 zurückgeleitet werden.

Beim führenden Stück Backgut ist der Abgabeschieber 20 in der am weitesten stromabwärts des Abgabeabschnitts 19 des Schuppen-Förderbands 12 gelegenen Abgabestellung. Das führende Stück Backgut wird dann vom Abgabeschieber 20 unter Einfluss der Mitnahmebewegung durch das Schuppen-Förderband 12 und unter Schwerkrafteinfluss hin zur dem Vereinzeler 8 nächstbenachbarten Förderaufnahme 24 gefördert. Während das führende Stück Backgut in die Förderaufnahme 24 überführt wird, kann schon die Vereinzelung des nächsten Stücks Backgut mit Hilfe des Vereinzelungs-Abweisers 16 und des Vereinzelungssensors erfolgen, wie oben beschrieben. Zum Abgeben des zweiten Stücks Backgut in die Förderaufnahme 24 verfährt der Abgabeschieber 20 ein Stück weit längs des Abgabeabschnitts 19 stromaufwärts, so das das neu vereinzelte Stück Backgut nach dem Abgeben neben dem zuerst vereinzelten Stück Backgut in der Förderaufnahme 24 zu liegen kommt. Dieser Vorgang wiederholt sich nun für nachfolgend vereinzelte Stücke Backgut, bis in der Förderaufnahme 24 ein Satz von zum Beispiel sechs oder acht Stücken Backgut vorliegt.

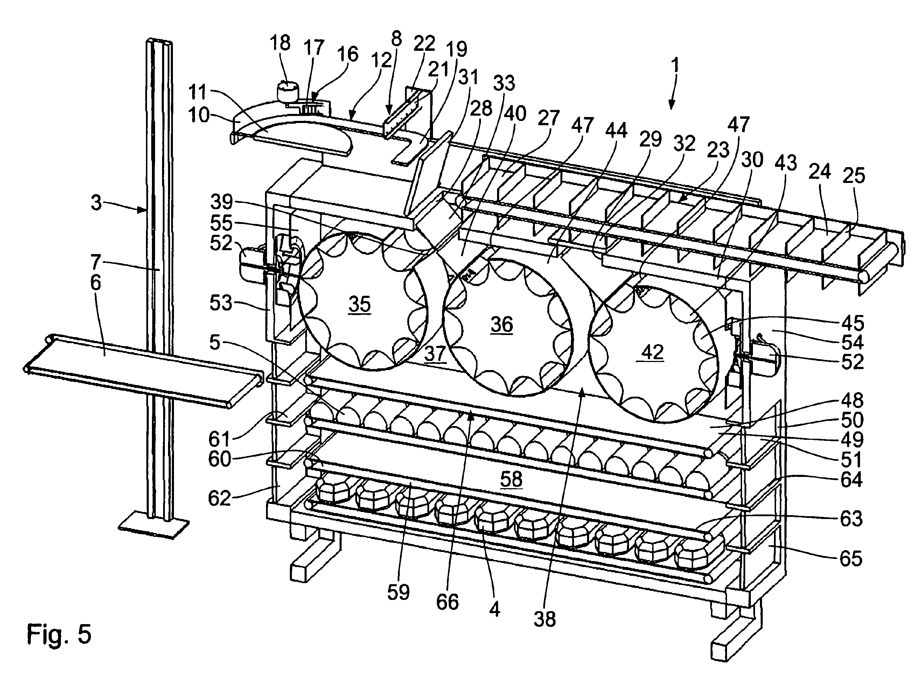

Sobald ein derartiger Satz vollständig ist, wird das Endlos-Förderband der Vorschalt-Fördereinrichtung 23 in der Zeichnung ein Stück weit nach rechts weiterbewegt, bis die nächste Förderaufnahme 24 dem Vereinzeler 8 abgabeseitig zugeordnet ist. Anschließend wird diese nächste Förderaufnahme 24 entsprechend dem oben Erläuterten befüllt. Dieser Vorgang wiederholt sich taktweise, bis eine vorgegebene Anzahl von Förderaufnahmen 24 mit jeweils einem Satz von Stücken Backgut bestückt ist. Beim dargestellten Ausführungsbeispiel ist es möglich, insgesamt 11 Förderaufnahmen 24 zu bestücken. Anschließend wird die Vorschalt-Fördereinrichtung 23 von der zum Beispiel in Fig. 1 dargestellten Aufnahmestellung in die in Fig. 5 dargestellte erste Abgabestellung überführt. Nun wird die der ersten Backofen-Zugabeöffnung 28 zugeordnete Verschlussklappe 31 geöffnet, wie in Fig. 5 dargestellt. Anschließend wird steuerseitig entschieden, welche der Backtrommeln 35, 36 befüllt werden soll und die Umschaltklappe 33 entsprechend umgestellt. In der Stellung der Umschaltklappe 33 nach Fig. 5 wird die mittlere Backtrommel 36 befüllt. Die äußere Begrenzungswand 44 dieser Backtrommel 36 wird so gedreht, dass die Durchtrittsöffnung 47 in Förderrichtung der zweiten Förderrutsche 40 nachgeordnet ist. Diese Stellung ist in Fig. 5 dargestellt. Anschließend kann der erste Aufnahmeabschnitt 43 der Backtrommel 36 befüllt werden. Hierzu wird das Endlos-Förderband der Vorschalt-Fördereinrichtung 23 angetrieben so weit verlagert, dass der abgabeseitige Satz von Stücken Backgut aus der Förderaufnahme 24 durch die erste Backofen-Zugabeöffnung 28 fällt und, geleitet von der Umschaltklappe 33 und der zweiten Förderrutsche 40, durch die Durchtrittsöffnung 47 in den zugeordneten Aufnahmeabschnitt 43 fällt. Anschließend wird die innere Begrenzungswand 45 ein Stück weit gedreht, so dass der nächste Aufnahmeabschnitt 43 der zweiten Förderrutsche 40 in Förderrichtung nachgeordnet vorliegt. Dieser Befüllvorgang für die Aufnahmeabschnitte 43 wiederholt sich nun taktweise insgesamt zehn Mal, so dass zehn der elf Aufnahmeabschnitte 43 der Backtrommel 36 befüllt sind. Anschließend wird die äußere Begrenzungswand 44 relativ zur inneren Begrenzungswand 45 derart verdreht, dass die Durchtrittsöffnung 47 dem einzigen leeren Aufnahmeabschnitt 43 zugeordnet ist.

In gleicher Weise kann auch die in der Zeichnung linke Backtrommel 35 befüllt werden. Hierzu wird die Umschaltklappe 33 um die Schwenkachse 34 derart verschwenkt, dass sie gemeinsam mit der ersten Förderrutsche 39 eine Förderverbindung zwischen der ersten Backofen-Zugabeöffnung 28 und der Durchtrittsöffnung 47 der Backtrommel 35 herstellt.

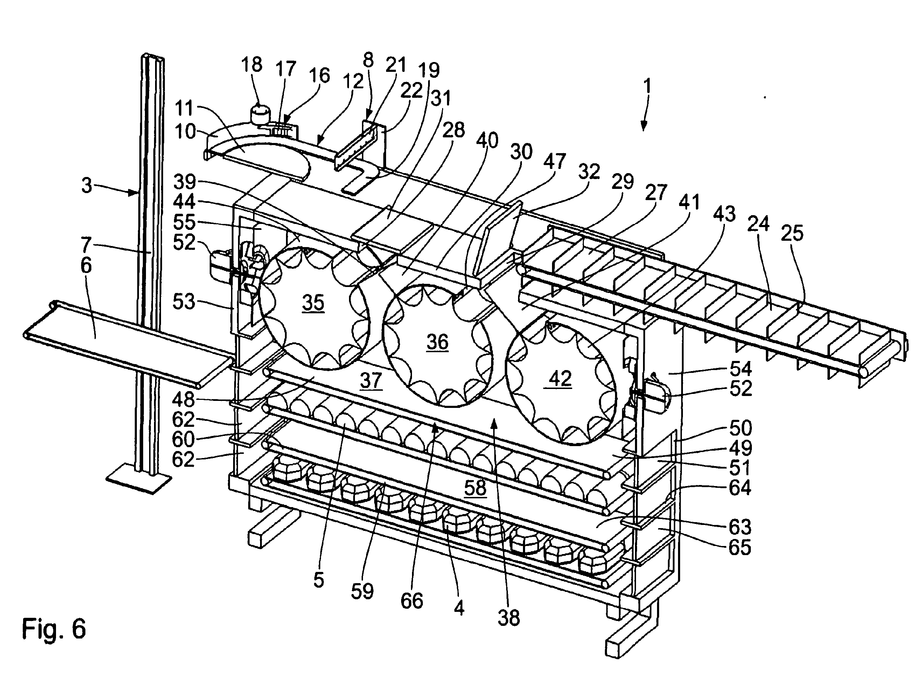

Zum Befüllen der in der Zeichnung rechten Backtrommel 42 wird die mit Sätzen von Stücken Backgut befüllte Vorschalt-Fördereinrichtung 23 in die zweite Abgabestellung nach Fig. 6 überführt. Die Verschlussklappe 32 der zweiten Backofen-Zugabeöffnung 29 wird geöffnet. Analog zum oben Ausgeführten erfolgt nun eine taktweise Befüllung von zehn der elf Aufnahmeabschnitte 43 der Backtrommel 42. Die Stücke Backgut in den Backtrommeln 35, 36, 42 können nun im Backofen 2 ausgebacken werden. Hierbei drehen sich die äußeren Begrenzungswände 44 synchron zu den inneren Begrenzungswänden 45. Nach Abschluss des Backvorgangs werden die Begrenzungswände 44, 45 synchron zueinander so gedreht, dass die Durchtrittsöffnung 47 ihre tiefste Stellung erreicht, in welcher sie dem Endlos-Ausgabeförderband 48 nächst benachbart vorliegt. Nun wird die innere Begrenzungswand 45 taktweise gedreht, während die äußere Begrenzungswand 44 stehen bleibt. Synchron zur taktweisen Drehung der inneren Begrenzungswand 44 wird das Endlos-Ausgabeförderband 48 jeweils ein Stück weiterbewegt. Diese taktweise, synchrone Verlagerung der inneren Begrenzungswand 45 einerseits und des Endlos-Ausgabeförderbands 48 erfolgt so lange, bis die zu entleerende Backtrommel 35, 36, 42 vollständig entleert ist. Anschließend wird das ausgebackene Backgut auf dem Endlos-Ausgabeförderband 48 hin zur Backofen-Abgabeöffnung 50 gefördert. Das ausgebackene Backgut kann die Backofen-Abgabeöffnung 50 dann durch die geöffnete Verschlussklappe 51 verlassen. Das ausgebackene Backgut gelangt dann in einen nicht dargestellten Lagerbehälter, wo es vom Kunden entnommen werden kann.

Den Backtrommeln 35, 36, 42 kann jeweils ein bestimmter Backgut-Typ des ersten Grundtyps zugeordnet sein. So können in der Backtrommel 35 zum Beispiel Brötchen gebacken werden, die eine vergleichsweise kurze Backzeit benötigen, während in der Backtrommel 42 Brötchen gebacken werden, die eine vergleichsweise lange Backzeit benötigen. Alternativ ist es natürlich möglich, keine Zuordnung zwischen den Backgut-Typen und den Backtrommeln 35, 36, 42 vorzusehen, und die Backzeiten über die zentrale Steuereinrichtung vorzugeben.

Sollen, zum Beispiel auf einen Kundenwunsch hin, stückweise einzeln vorliegende und geförderte Stücke Backgut, zum Beispiel Brote 4 oder Baguettes 5, gebacken werden, so werden diese zunächst stückweise auf das Endlos-Förderband 6 in nicht dargestellter Weise aufgegeben. Sodann wird eines der Endlos-Backförderbänder 59 in der zweiten Backzone 58 ausgewählt, auf welchem gebacken werden soll. Das Endlos-Förderband 6 der Fördervorrichtung 3 wird dann auf gleiche Höhe wie das ausgewählte Endlos-Förderband 59 gebracht. Mit dem Querantrieb wird das Endlos-Förderband 6 soweit verlagert, bis es der Backofen-Zugabeöffnung 61 des ausgewählten Endlos-Backförderbands 59 benachbart vorliegt. Sodann werden die auf dem Endlos-Förderband 6 vorliegenden Stücke Backgut an der geöffneten Verschlussklappe 62 vorbei durch die Backofen-Zugabeöffnung 61 auf das ausgewählte Endlos-Backförderband 59 übergeben.

Diese Übergabe erfolgt, bis das Endlos-Förderband 6 geleert ist. Gegebenenfalls kann das Endlos-Förderband 6 nochmals bestückt werden, um ein ausgewähltes Endlos-Backförderband 59 vollständig zu befüllen oder auch um alle Endlos-Backförderbänder 59 der zweiten Backzone 58 zu bestücken. Sobald dieser Bestückvorgang abgeschlossen ist, werden die Stücke Backgut auf den Endlos-Backförderbändern 59 in der zweiten Backzone 58 ausgebacken.

Aufgrund der etagenweisen Anordnung der Endlos-Backförderbänder 59 unterhalb des Endlos-Ausgabeförderbands 48 kommt es im Backraum 38 des Backofens 2 zu einer Temperaturschichtung. Die Temperatur im Bereich des unteren Endlos-Backförderbands 59 ist etwas niedriger als die des darüber angeordneten Endlos-Backförderbands 59. Weiter nach oben hin steigt die Temperatur weiter an. In der ersten Backzone 37 ist die Temperatur am höchsten. Diese Temperaturschichtung lässt sich ausnutzen, um auf den verschiedenen Endlos-Backförderbändern 59 verschiedene Typen von Backgut zu backen. Nach Abschluss des Backvorgangs in der zweiten Backzone 58 wird das ausgebackene Backgut auf dem ausgewählten Endlos-Backförderband 59 hin zur jeweiligen Backofen-Ausgabeöffnung 64 gefördert und an der geöffneten Verschlussklappe 65 vorbei in einen nicht dargestellten Lagerbehälter abgegeben, wo es vom Kunden entnommen werden kann.

Mit dem Backofen 2 ist auf Wunsch ein Backen von Backgut möglich, welches einem der oben beschriebenen Grundtypen angehört. Auch innerhalb der Grundtypen kann Backgut mit verschiedenen Backanforderungen hinsichtlich der Backdauer und der Backtemperatur gebacken werden.

Neben der Umluft-Quelle weist der Backofen 2 als zusätzliche, Strahlungswärme erzeugende Heizelemente eine Mehrzahl von nur in Fig. 4 schematisch angedeuteten Heizstrahlern 67 auf. Diese sind in Fig. 4 im Querschnitt dargestellt. Die Heizstrahler 67 weisen eine elektrische Widerstandsheizung auf und sind jeweils zwischen dem Obertrum und dem Untertrum der Endlos-Backförderbänder 59 angeordnet. Die Heizstrahler 67 im untersten Endlos-Backförderband 59 dienen zur Erzeugung von Unterhitze für Backgut, welches auf dem untersten Endlos-Backförderband 59 angeordnet ist. Die Heizstrahler 67 im mittleren Endlos-Backförderband 59 erzeugen Oberhitze für Backgut, welches auf dem untersten Endlos-Backförderband 59 angeordnet ist, und Unterhitze für Backgut, welches auf dem mittleren Endlos-Backförderband 59 angeordnet ist. Die Heizstrahler 67 im obersten Endlos-Backförderband 59 erzeugen Oberhitze für Backgut, welches auf dem mittleren Endlos-Backförderband 59 angeordnet ist und Unterhitze für Backgut, welches auf dem obersten Endlos-Backförderband 59 angeordnet ist. Unterhalb des Endlos-Ausgabeförderbandes 48 sind nur in Fig. 4 schematisch im Querschnitt weitere Heizstrahler 68 angedeutet, die ebenfalls als Strahlungs-Wärmequellen für den Backofen 2 dienen. Die Heizstrahler 68 erzeugen Oberhitze für Backgut, welches auf dem obersten Endlos-Backförderband 59 angeordnet ist.

Über die Heizstrahler 67, 68 lässt sich die Temperaturverteilung im Backofen 2, insbesondere die Temperaturschichtung, beeinflussen. Die Heizleistung der Heizstrahler 67, 68 kann unabhängig voneinander von der zentralen Steuereinrichtung vorgegeben werden.

## Patentansprüche

1. Backofen (2)
- mit einem Backofengehäuse (9)
- - mit einem Backraum (38),
- - mit mindestens einer Zugabeöffnung (28, 29, 61) zur Zugabe von Backgut (4, 5) in den Backraum (38),
- - mit mindestens einer Ausgabeöffnung (50, 64) zur Ausgabe von Backgut (4, 5) aus dem Backraum (38),
- mit einer Umluftquelle (52),
- mit einer Fördereinrichtung (66) zur Förderung des Backguts (4, 5) von der Zugabeöffnung (28, 29, 61) durch den Backraum (38) hin zur Ausgabeöffnung (50, 64),
wobei der Backraum (38) unterteilt ist in mindestens zwei Backzonen (37, 58), die jeweils mindestens eine eigene Backofen-Zugabeöffnung (28, 29, 61) aufweisen, **dadurch gekennzeichnet, dass**
- eine erste (37) der mindestens zwei Backzonen (37, 58) derart ausgebildet ist, dass dort eine Mehrzahl von zugabeseitig in Form einer losen Schüttung vorliegenden und geförderten Stücken Backgut gebacken wird,
- eine zweite (58) der mindestens zwei Backzonen (37, 58) derart ausgebildet ist, dass dort eine Mehrzahl von stückweise einzeln vorliegenden und geförderten Stücken Backgut (4, 5) gebacken wird,
wobei eine erste (37) der mindestens zwei Backzonen (37, 58) mindestens eine Backtrommel (35, 36, 42) mit jeweils mindestens einem Aufnahmeabschnitt (43) für Backgut und einer äußeren Begrenzungswand (44) aufweist, wobei eine Antriebseinrichtung (46) vorgesehen ist, mit welcher der Aufnahmeabschnitt (43) um eine horizontal verlaufende Rotationsachse angetrieben ist,
wobei der mindestens eine Aufnahmeabschnitt (43) nach außen hin durch die äußere Begrenzungswand (44) der Backtrommel (35, 36, 42) und nach innen hin durch eine innere Begrenzungswand (45) begrenzt ist, wobei die Antriebseinrichtung (46) so ausgeführt ist, dass die beiden Begrenzungswände (44, 45) relativ zueinander um die Rotationsachse unabhängig angetrieben sind.

2. Backofen nach Anspruch 1, **dadurch gekennzeichnet,**
**dass** an der mindestens einen Backtrommel (35, 36,42) Flügel (56) zur Umwälzung der Umluft angebracht sind.

3. Backofen nach Anspruch 2, **dadurch gekennzeichnet,**
**dass** die Flügel (56) an den Stirnwänden (57) der Backtrommel (35, 36, 42) angeordnet sind, und vorzugsweise radial verlaufen.

4. Backofen nach einem der Ansprüche 1 bis 3, **dadurch gekennzeichnet, dass** in der äußeren Begrenzungswand (44) der Backtrommel (35, 36, 42) eine Backtrommel-Zugabeöffnung (47) ausgeführt ist, wobei die Fördereinrichtung (66) einen Förderabschnitt (33, 39, 40, 41) von der mindestens einen Backofen-Zugabeöffnung (28, 29) hin zur Backtrommel-Zugabeöffnung (47) aufweist.

5. Backofen nach Anspruch 4, **dadurch gekennzeichnet,**
**dass** zwei Backtrommeln (35, 36, 42) vorgesehen sind, wobei der Förderabschnitt (33, 39, 40) ein Weichenelement (33) aufweist, welches mit einer Steuereinrichtung derart zusammenarbeitet, dass über das Weichenelement (33) eine gesteuerte Förderung von der Backofen-Zugabeöffnung (28) hin zur Backtrommel-Zugabeöffnung (47) der mittels der Steuereinrichtung ausgewählten Backtrommel (35, 36) erfolgt.

6. Backofen nach Anspruch 5, **dadurch gekennzeichnet,**
**dass** das Weichenelement (33) als schwenkbare Umschaltklappe ausgeführt ist.

7. Backofen nach einem der Ansprüche 1 bis 6, **dadurch gekennzeichnet, dass** der mindestens einen Backofen-Zugabeöffnung (28, 29) der ersten Backzone (37) ein Backgut-Vereinzeler (8) vorgeschaltet ist, wobei vorzugsweise zwischen dem Backgut-Vereinzeler (8) und der Backofen-Zugabeöffnung (28, 29) eine Vorschalt-Fördereinrichtung (23) für vereinzeltes Backgut angeordnet ist.

8. Backofen nach Anspruch 7, **dadurch gekennzeichnet,**
**dass** die Vorschalt-Fördereinrichtung (23) als Endlos-Vorschaltförderband ausgebildet ist, welche insbesondere eine Mehrzahl von Förderaufnahmen (24) aufweist, die durch Trennwandabschnitte (25) voneinander getrennt sind.

9. Backofen nach Anspruch 8, **dadurch gekennzeichnet,**
**dass** das Endlos-Vorschaltförderband über dem Backofengehäuse (9) angeordnet und insgesamt relativ zu diesem derart verlagerbar ist, dass ein abgabeseitiges Ende (27) des Endlos-Vorschaltförderbands (23) jeder Backofen-Zugabeöffnung (28, 29) der ersten Backzone (37) zur Abgabe von Backgut vom Endlos-Vorschaltförderband (23) hin zur Backofen-Zugabeöffnung (28, 29) zuordenbar ist.

10. Backofen nach einem der Ansprüche 1 bis 9, **dadurch gekennzeichnet, dass** im unteren Bereich der ersten Backzone (37) ein Endlos-Ausgabeförderband (48) angeordnet ist, welches ausgabeseitig einer Backofen-Abgabeöffnung (50) der ersten Backzone (37) benachbart ist.

11. Backofen nach einem der Ansprüche 1 bis 10, **dadurch gekennzeichnet, dass** die zweite (58) der beiden Backzonen (37, 58) mindestens ein Endlos-Backförderband (59) aufweist, welches zugabeseitig einer Backofen-Zugabeöffnung (61) der zweiten Backzone (58) und abgabeseitig einer Backofen-Abgabeöffnung (64) der zweiten Backzone (58) benachbart ist.

12. Backofen nach Anspruch 11, **gekennzeichnet durch** eine Mehrzahl von etagenweise übereinander angeordneten Endlos-Backförderbändern (59).

13. Backofen nach einem der Ansprüche 10 bis 12, **dadurch gekennzeichnet, dass** das mindestens eine Endlos-Backförderband (59) unter dem Endlos-Ausgabeförderband (48) angeordnet ist.

14. Backofen nach einem der Ansprüche 1 bis 13, **gekennzeichnet durch** mindestens eine Strahlungs-Wärmequelle (67, 68), die im Backraum (38) insbesondere in der zweiten Backzone (58) angeordnet ist.

15. Backofen nach Anspruch 14, **dadurch gekennzeichnet, dass** die mindestens eine Strahlungs-Wärmequelle (67, 68) als Heizstrahler ausgebildet ist.

16. Backofen nach Anspruch 14 oder 15, **dadurch gekennzeichnet, dass** die mindestens eine Strahlungs-Wärmequelle (67, 68) zwischen dem Ober- und dem Untertrum eines wärmestrahlungsdurchlässigen Förderbandes (59) im Backraum (38) angeordnet ist.

17. Backsystem (1) mit einem Backofen (2) nach einem der Ansprüche 1 bis 16 und einer diesem vorgeschalteten Fördervorrichtung (3) zur Förderung von Backgut hin zum Backofen (2).

## Claims

1. Baking oven (2)
- having a baking oven housing (9)
- - having a baking chamber (38),
- - having at least one supply inlet (28, 29, 61) for the feeding of dough pieces (4, 5) into the baking chamber (38),
- - having at least one delivery outlet (50, 64) for the delivery of dough pieces (4, 5) from the baking chamber (38),
- having a circulating air source (52),
- having a means of conveyance (66) for conveying the dough pieces (4, 5) from the supply inlet (28, 29, 61) through the baking chamber (38) to the delivery outlet (50, 64),
wherein the baking chamber (38) is divided into at least two baking zones (37, 58), each provided with at least one own baking oven supply inlet (28, 29, 61), **characterised in that**
- a first baking zone (37) of the at least two baking zones (37, 58) is designed in such a manner that a plurality of dough pieces which are available and conveyed on the supply side in the form of bulk material are baked there,
- a second baking zone (58) of the at least two baking zones (37, 58) is designed in such a manner that a plurality of dough pieces which are available and conveyed as individual dough pieces (4, 5) are baked there,
wherein a first baking zone (37) of the at least two baking zones (37, 58) is provided with at least one baking drum (35, 36, 42) each being provided with at least one receiving portion (43) for dough pieces and an outer defining wall (44), with a drive unit (46) being provided by means of which the receiving portion (43) is driven around a horizontal rotation axis,
the at least one receiving portion (43) is outwardly defined by the outer defining wall (44) of the baking drum (35, 36, 42) and is inwardly defined by an inner defining wall (45), with the drive unit (46) being defined so that the two defining walls (44, 45) are driven independently relative to each other around the rotation axis.

2. Baking oven according to claim 1, **characterised in that** vanes (56) for circulating the circulating air are attached to the at least one baking drum (35, 36, 42).

3. Baking oven according to claim 2, **characterised in that** the vanes (56) are arranged on the front walls (57) of the baking drum (35, 36, 42) preferably extending in a radial direction.

4. Baking oven according to any of the claims 1 to 3, **characterised in that** a baking drum supply inlet (47) is provided in the outer defining wall (44) of the baking drum (35, 36, 42), the means of conveyance (66) being provided with a conveyance portion (33, 39, 40, 41) from the at least one baking oven supply inlet (28, 29) to the baking drum supply inlet (47).

5. Baking oven according to claim 4, **characterised in that** two baking drums (35, 36, 42) are provided, the conveyance portion (33, 39, 40) being provided with a switch member (33) which co-operates with a control unit so that via the switch element (33) a controlled conveyance from the baking oven supply inlet (28) to the baking drum supply inlet (47) of the baking drum (35, 36) which is selected by means of the control unit is made.

6. Baking oven according to claim 5, **characterised in that** the switch member (33) is designed as a hinged switch flap.

7. Baking oven according to any of the claims 1 to 6, **characterised in that** a dough-piece separator (8) is provided upstream of the at least one baking oven supply inlet (28, 29) of the first baking zone (37), an upstream means of conveyance (23) for separated dough pieces being arranged preferably between the dough-piece separator (8) and the baking oven supply inlet (28, 29).

8. Baking oven according to claim 7, **characterised in that** the upstream means of conveyance (23) is provided as an endless upstream conveyor belt, being provided in particular with a plurality of receiving portions for conveyance (24) separated from each other by partition wall portions (25).

9. Baking oven according to claim 8, **characterised in that** the endless upstream conveyor belt is arranged above the baking oven housing (9) and can be shifted as a whole relative to the same so that a delivery side end (27) of the endless upstream conveyor belt (23) can be associated with each baking oven supply inlet (28, 29) of the first baking zone (37) for the delivery of dough pieces from the endless upstream conveyor belt (23) to the baking oven supply inlet (28, 29).

10. Baking oven according to any of the claims 1 to 9, **characterised in that** an endless delivery conveyor belt (48) is arranged in the lower area of the first baking zone (37) which is adjacent to a baking oven delivery outlet (50) of the first baking zone (37) on the delivery side.

11. Baking oven according to any of the claims 1 to 10, **characterised in that** the second baking zone (58) of the two baking zones (37, 58) is provided with at least one endless baking conveyor belt (59) which is adjacent on the supply side to a baking oven supply inlet (61) of the second baking zone (58) and on the delivery side adjacent to a baking oven delivery outlet (64) of the second baking zone (58).

12. Baking oven according to claim 11, **characterised by** a plurality of endless baking conveyor belts (59) arranged in decks on top of each other.

13. Baking oven according to any of the claims 10 to 12, **characterised in that** the at least one endless baking conveyor belt (59) is arranged below the endless delivery conveyor belt (48).

14. Baking oven according to any of the claims 1 to 13, **characterised by** at least one radiant heat source (67, 68) which is arranged in the baking chamber (38), in particular in the second baking zone (58).

15. Baking oven according to claim 14, **characterised in that** the at least one radiant heat source (67, 68) is provided as a radiant heater.

16. Baking oven according to claim 14 or 15, **characterised in that** the at least one radiant heat source (67, 68) is arranged between the upper and the lower strand of a conveyor belt (59) in the baking chamber (38), the conveyor belt (59) being permeable to heat radiation.

17. Baking system (1) with a baking oven (2) according to any of the claims 1 to 16 and a means of conveyance (3) arranged upstream thereof for conveying dough pieces to the baking oven (2).

## Revendications

1. Four de cuisson (2)
- avec un carter (9)
- - avec une enceinte de cuisson (38),
- - avec au moins une ouverture d'admission (28, 29, 61) pour entrer un produit à cuire (4, 5) dans l'enceinte de cuisson (38),
- - avec au moins une ouverture de sortie (50, 64) pour amener le produit à cuire (4, 5) hors de l'enceinte de cuisson (38),
- avec une source d'air de circulation (52),
- avec un dispositif de transport (66) pour transporter le produit à cuire (4, 5) depuis l'ouverture d'admission (28, 29, 61) à travers l'enceinte de cuisson (38) vers l'ouverture de sortie (50, 64),
sachant que l'enceinte de cuisson (38) est divisée en au moins deux zones de cuisson (37, 58), dont chacune comporte au moins une ouverture d'admission (28, 29, 61) qui lui est propre, **caractérisé en ce que**
- une première (37) desdites au moins deux zones de cuisson (37, 58) est réalisée de telle sorte que l'on peut y cuire une pluralité de pièces de produit à cuire en vrac, transportées depuis le côté admission,
- une deuxième (58) desdites au moins deux zones de cuisson (37, 58) étant réalisée de telle sorte qu'on peut y cuire une pluralité de pièces de produit à cuire (4, 5), disposées en pièces séparées et transportées,
sachant qu'une première desdites au moins deux zones de cuisson (37, 58) comporte au moins un tambour de cuisson (35, 36, 42) ayant chacun au moins une zone de réception (43) du produit à cuire et une paroi de délimitation (44) extérieure, un dispositif d'entraînement (46) étant prévu pour actionner la zone de réception (43) autour d'un axe de rotation orienté horizontalement,
sachant que ladite au moins une zone de réception (43) est limitée vers l'extérieur par la paroi de délimitation (44) extérieure du tambour de cuisson (35, 36, 42) et vers l'intérieur par une paroi de délimitation (45) intérieure, le dispositif d'entraînement (46) étant configuré de telle sorte que les deux parois de délimitation (44, 45) sont actionnées indépendamment l'une par rapport à l'autre autour de l'axe de rotation.

2. Four de cuisson selon la revendication 1, **caractérisé en ce que** des ailettes (56) sont montées sur ledit au moins un tambour de cuisson (35, 36, 42) pour faire circuler l'air.

3. Four de cuisson selon la revendication 2, **caractérisé en ce que** les ailettes (56) sont agencées sur les parois frontales (57) des tambours de cuisson (35, 36, 42), et sont orientées de préférence radialement.

4. Four de cuisson selon l'une quelconque des revendications 1 à 3, **caractérisé en ce que** dans la paroi de délimitation (44) extérieure du tambour de cuisson (35, 36, 42) est réalisée une ouverture d'admission (47), le dispositif de transport (66) comportant un tronçon de transport (33, 39, 40, 41) depuis ladite au moins une ouverture d'admission (28, 29) du four vers l'ouverture d'admission (47) du tambour de cuisson.

5. Four de cuisson selon la revendication 4, **caractérisé en ce qu'**il est prévu deux tambours de cuisson (35, 36, 42), le tronçon de transport (33, 39, 40) comportant un élément d'aiguillage (33) qui coopère avec un dispositif de commande, de telle sorte que, par l'intermédiaire de l'élément d'aiguillage (33), est effectué un transport commandé depuis l'ouverture d'admission (28) du four vers l'ouverture d'admission (47) du tambour de cuisson (35, 36) sélectionné par le dispositif de commande.

6. Four de cuisson selon la revendication 5, **caractérisé en ce que** l'élément d'aiguillage (33) est réalisé sous la forme d'un volet directionnel pivotant.

7. Four de cuisson selon l'une quelconque des revendications 1 à 6, **caractérisé en ce qu'**un séparateur de produit à cuire (8) est agencé en amont de ladite au moins une ouverture d'admission (28, 29) de la première zone de cuisson (37), un dispositif de transport de tête (23) pour le produit à cuire séparé étant agencé de préférence entre le séparateur (8) et l'ouverture d'admission (28, 29) du four.

8. Four de cuisson selon la revendication 7, **caractérisé en ce que** le dispositif de transport de tête (23) est réalisé sous forme de bande transporteuse continue, qui comporte en particulier une pluralité de logements (24) qui sont séparés les uns des autres par des cloisons (25).

9. Four de cuisson selon la revendication 8, **caractérisé en ce que** la bande transporteuse de tête continue est disposée au-dessus du carter (9) du four et peut être déplacée dans son ensemble par rapport à celui-ci, de telle sorte qu'une extrémité (27) du côté distribution de la bande transporteuse de tête continue (23) peut être associée à chaque ouverture d'admission (28, 29) de la première zone de cuisson (37) pour distribuer le produit à cuire à partir de la bande transporteuse de tête continue (23) dans l'ouverture d'admission (28, 29) du four.

10. Four de cuisson selon l'une quelconque des revendications 1 à 9, **caractérisé en ce que** dans la zone inférieure de la première zone de cuisson (37) est agencée une bande transporteuse d'évacuation continue (48) qui, du côté évacuation, est adjacente à une ouverture de sortie (50) de la première zone de cuisson (37).

11. Four de cuisson selon l'une quelconque des revendications 1 à 10, **caractérisé en ce que** la deuxième (58) des deux zones de cuisson (37, 58) comporte au moins une bande transporteuse de cuisson continue (59) qui, du côté admission, est adjacente à une ouverture d'admission (61) de la deuxième zone de cuisson (58) et, du côté évacuation, est adjacente à une ouverture de sortie (64) de la deuxième zone de cuisson (58).

12. Four de cuisson selon la revendication 11, **caractérisé par** une pluralité de bandes transporteuses de cuisson continues (59), agencées par étages les unes au-dessus des autres.

13. Four de cuisson selon l'une quelconque des revendications 10 à 12, **caractérisé en ce que** ladite au moins une bande transporteuse de cuisson continue (59) est agencée en dessous de la bande transporteuse d'évacuation continue (48).

14. Four de cuisson selon l'une quelconque des revendications 1 à 13, **caractérisé par** au moins une source de chaleur par rayonnement (67, 68) qui est agencée dans l'enceinte de cuisson (38), en particulier dans la deuxième zone de cuisson (58).

15. Four de cuisson selon la revendication 14, **caractérisé en ce que** ladite au moins une source de chaleur par rayonnement (67, 68) est réalisée sous la forme d'un radiateur.

16. Four de cuisson selon la revendication 14 ou 15, **caractérisé en ce que** ladite au moins une source de chaleur par rayonnement (67, 68) est agencée dans l'enceinte de cuisson (38) entre le brin supérieur et le brin inférieur d'une bande transporteuse (59) laissant passer le rayonnement thermique.

17. Système de cuisson (1) comportant un four de cuisson (2) selon l'une quelconque des revendications 1 à 16 et un dispositif de transport (3), monté en amont de celui-ci, pour transporter les produits à cuire vers le four de cuisson (2).
